# FASCICULE DE BREVET EUROPEEN

(11) **EP 3 357 336 B1**
(45) Date de publication et mention de la délivrance du brevet: **03.01.2024**
(21) Numéro de dépôt: 18155442.9
(22) Date de dépôt: 07.02.2018
(51) Int. Cl.: A01N 25/00, A01N 59/00, A01P 1/00, A01P 3/00

(54) **PROCÉDÉ DE TRAITEMENT DE PLANTES CULTIVÉES**
VERFAHREN ZUR BEHANDLUNG VON ANGEBAUTEN PFLANZEN
METHOD FOR TREATMENT OF CULTIVATED PLANTS

(30) Priorité: 07.02.2017 BE 201705077
(43) Date de publication de la demande: 08.08.2018
(73) Titulaire: Blomme, Jacques, 8300 Knokke (BE); Van der Monde, Frederic, 1180 Bruxelles (BE); Hilbring, Eugen, 1325 Chaumont-Gistoux (BE)
(72) Inventeur: Blomme, Jacques, 8300 Knokke (BE); Van der Monde, Frederic, 1180 Bruxelles (BE); Hilbring, Eugen, 1325 Chaumont-Gistoux (BE)
(74) Mandataire: Kirkpatrick

(56) Documents cités:
- EP-A2- 1 356 730
- WO-A1-2008/089893
- WO-A1-2013/147962
- US-A- 5 974 728

## Description

L'invention s'inscrit dans le domaine du traitement des cultures pour la lutte contre les bactéries, les virus et autres parasites tels que des insectes, des champignons, etc. Le domaine de l'invention concerne tout type de culture (céréales, vignes, vergers, plantations fruitières, herbes aromatiques, condiments, etc.). Il peut s'agir de cultures en espace fermé ou ouvert, sous serre, de plantations en pleine terre ou par hydro-culture, notamment.

Des pesticides chimiques sont utilisés depuis longtemps dans l'agriculture pour éliminer les parasites. Cependant, ces composés chimiques peuvent avoir un impact négatif non-négligeable tant sur l'environnement que directement sur la santé des consommateurs. Par conséquent, de nouvelles méthodes sont nécessaires pour lutter contre les parasites avec un impact moindre, voire nul, sur l'environnement. De plus, le renforcement des normes et règlementations au niveau de l'utilisation de pesticides justifie l'intérêt de procéder à de nouvelles approches pour la lutte contre les parasites.

On connaît, par le brevet US 7.134.239, un procédé pour contrôler les parasites des cultures en appliquant un flux d'air chaud directement sur les plantes. En pratique, et selon ce procédé, de l'air chaud est projeté sur les plantes à une courte distance, au départ d'un véhicule en mouvement. Une telle propulsion d'air chaud a pour effet d'éliminer les champignons affectant les plantes, mais également d'éliminer les insectes nocifs par déshydratation et, dans le cas d'insectes avec des ailes, en endommageant les ailes des insectes. En outre, ce procédé permet d'éliminer la condensation sur les plantes, évitant ainsi le développement de champignons indésirables. Toutefois, l'efficacité de ce procédé est limitée et il ne permet pas d'éliminer totalement l'utilisation de pesticides chimiques. US 5 974 728 A divulgue l'utilisation d'air chaud en combinaison avec de l'eau chaude pressurisée pour le traitement de plantes cultivées contre des parasites. Ce document ne divulgue pas l'utilisation d'eau activée électro-chimiquement après le traitement avec un flux d'air chaud.

La demanderesse a donc jugé nécessaire de proposer un procédé écologique de traitement de cultures, dont l'efficacité est supérieure à celle des méthodes proposées jusqu'ici.

A cet effet, la présente invention concerne un procédé de traitement de plantes cultivées contre les parasites comprenant les étapes suivantes :
(i) envoi d'air chaud vers la plante ;
(ii) immédiatement après l'envoi d'air chaud, pulvérisation sur la plante d'eau activée électro-chimiquement.

Par plantes, on entend aussi bien des plantes en terre que des fruits ou autres types de produits de culture.

L'eau activée électro-chimiquement (ECA, electrochemically activated), est obtenue par électrolyse de l'eau avec du sel. L'eau ECA est connue pour son action désinfectante et détergente (US 2008/0260922). L'eau ECA est particulièrement efficace pour empêcher le développement de microbes et autres agents nocifs. Elle trouve des applications dans les domaines du traitement de l'eau, pour la décontamination des graines, de l'amidon et des produits de mouture, ainsi que comme produit désinfectant ou nettoyant. En outre, de par sa composition à base d'eau et de sel uniquement, l'eau ECA est sans danger pour l'homme et pour l'environnement.

La double approche du procédé de l'invention permet non seulement de combiner les effets de l'air chaud et de l'eau activée électro-chimiquement sur les parasites des cultures, mais elle apporte également un nouvel effet de synergie, qui consiste à bénéficier de l'ouverture des cellules de la plante suite à l'augmentation de la température causée par l'envoi d'air chaud, assurant ainsi une meilleure absorption de l'eau activée électro-chimiquement dans la plante et accentuant de ce fait son action désinfectante.

En outre, le procédé de la présente invention a un impact très limité sur l'environnement. L'agent désinfectant est en effet non-toxique, à la fois pour l'être humain et pour la vie aquatique. Les effets indésirables (vapeurs et émanations toxiques, brûlures de la peau, éruptions cutanées, réactions allergiques, etc.), régulièrement associés à l'utilisation de pesticides, sont également évités ainsi que l'utilisation d'équipements de protection individuels généralement requis, tels que des gants, masques, etc. De plus, la présente invention est une alternative économique à l'utilisation de pesticides, généralement coûteux.

Enfin, la température, la vitesse et la durée d'application de l'air chaud peuvent être contrôlées de manière à induire un stress pour la plante, mais qui est positif, qui, s'il s'agit d'une plante avant récolte, réagit alors par un regain de croissance et de rendement, ainsi que par une activation de sa capacité à résister à une agression.

Le stress induit pour la plante peut être dû à un choc thermique, à une augmentation soudaine du niveau de CO₂, à une diminution du niveau d'humidité, au vent, etc. Quelle que soit la source de stress, la structure de la plante ainsi que sa biomasse sont significativement renforcées avec, pour résultat, une croissance plus importante et un rendement supérieur.

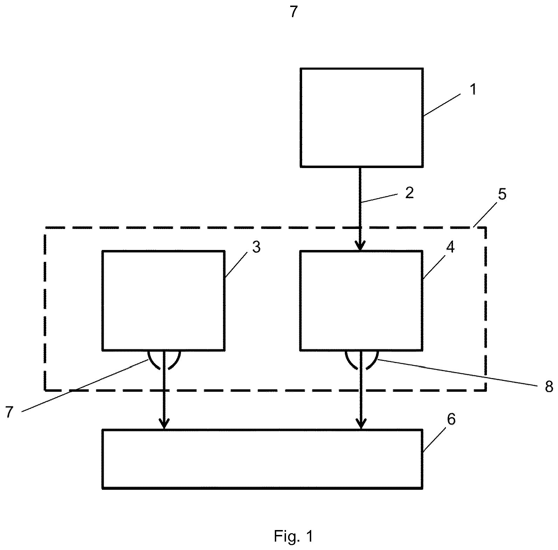

L'invention sera mieux comprise à la lecture de la description suivante du procédé de l'invention, en référence à la figure 1 annexée, qui illustre le procédé de traitement de cultures contre les parasites de la présente invention.

L'invention est mise en oeuvre au moyen d'un dispositif de traitement de cultures (5) comprenant un élément (3) de production et de soufflerie d'air chaud équipé ici d'une tuyère (7) et un pulvérisateur (4) muni ici aussi d'une buse de pulvérisation (8). Un bac d'électrolyse (1) est ici également prévu pour la production d'eau activée électro-chimiquement (2). L'eau activée électro-chimiquement (2) ainsi produite est introduite dans le pulvérisateur (4). Immédiatement après l'envoi d'air chaud par la tuyère (7) de la soufflerie (3) sur des plantes (6), de l'eau activée électro-chimiquement (2) est envoyée sur les plantes (6) par la buse de pulvérisation (8) du pulvérisateur (4).

L'air de la soufflerie (3) peut être projeté sur les plantes par exemple à une vitesse de 35 à 40 m/s.

L'eau activée électro-chimiquement (2) peut être produite par électrolyse d'une solution aqueuse d'un sel dans une cellule électrochimique comprenant au moins une cathode et une anode. Lorsque les deux électrodes sont mises sous tension, les ions positifs et négatifs contenus initialement dans la solution aqueuse de sel se recombinent pour former d'un côté de la cellule un détergent et, de l'autre côté, un agent désinfectant.

Dans une mise en oeuvre préférée du procédé de l'invention, la solution aqueuse à électrolyser est une solution de sel d'un métal alcalin.

Le sel d'un métal alcalin peut être du chlorure de sodium ou du chlorure de potassium. Dans ce cas, le détergent est une solution alcaline d'hydroxyde de sodium ou d'hydroxyde de potassium, respectivement, et l'agent désinfectant est une solution d'acide hypochloreux, HOCI. L'acide hypochloreux est un acide faible qui peut se dissocier en ions hypochlorites (ClO⁻). L'acide hypochloreux HOCI est connu pour sa puissante action désinfectante, largement supérieure à celle de l'eau de javel (NaClO). Afin de favoriser la présence dominante d'acide hypochloreux, et d'ainsi optimiser l'efficacité de l'action désinfectant, le pH de la solution d'eau ionisée peut-être contrôlé. De préférence, le pH de la solution est contrôlé pour être égal à environ 7. A ce pH, l'espèce HOCI est dominante dans la solution.

Le sel d'un métal alcalin peut aussi être du carbonate de sodium ou du bicarbonate de sodium.

La soufflerie (3) comprend un système de chauffage et un ensemble d'aspiration, de propulsion et de dispersion d'air. La température de l'air chaud envoyé sur les plantes est parfaitement contrôlée de sorte à s'adapter à la nature de la plante à traiter.

Le dispositif de traitement (5) peut être monté sur un véhicule ou une remorque de tracteur, et être ainsi mobile. Sous serre, ce sont les plantes qui peuvent être mobiles.

## Revendications

1. Procédé de traitement de plantes cultivées (6) contre les parasites comprenant les étapes suivantes :
(i) envoi (3,7) d'air chaud vers les plantes ;
(ii) immédiatement après l'envoi (3,7) d'air chaud, pulvérisation (4,8) sur les plantes (6) d'eau activée électro-chimiquement (2), obtenue par électrolyse de l'eau avec du sel, comme agent désinfectant et détergent.

2. Procédé de traitement selon la revendication 1, selon lequel l'eau activée électro-chimiquement (2) est obtenue au départ d'une solution aqueuse d'un sel de métal alcalin.

3. Procédé de traitement selon la revendication 2, selon lequel le sel de métal alcalin est l'un des composants du groupe comprenant l'hydroxyde de sodium, l'hydroxyde de potassium, le carbonate de sodium et le bicarbonate de sodium.

## Patentansprüche

1. Bearbeitungsverfahren von Kulturpflanzen (6) gegen Schädlinge, umfassend die folgenden Schritte:
(i) Senden (3, 7) von Heißluft zu den Pflanzen;
(ii) unverzüglich nach dem Senden (3, 7) von Heißluft Versprühen (4, 8) von elektro-chemisch aktiviertem Wasser (2), das per Elektrolyse des Wassers mit Salz erhalten wird, als Desinfektionsmittel und Reinigungsmittel auf die Pflanzen (6).

2. Bearbeitungsverfahren gemäß Anspruch 1, nach dem das elektro-chemisch aktivierte Wasser (2) ausgehend von einer wässerigen Lösung eines alkalischen Metallsalzes erhalten wird.

3. Bearbeitungsverfahren gemäß Anspruch 2, nach dem das alkalische Metallsalz einer der Bestandteile der Gruppe ist, umfassend Natriumhydroxid, Kaliumhydroxid, Natriumkarbonat und Natriumbikarbonat.

## Claims

1. Process for treating cultivated plants (6) against pests comprising the following steps:
(i) sending (3.7) hot air to the plants;
(ii) immediately after sending (3.7) the hot air, spraying (4.8) on the plants (6) electrochemically activated water (2), obtained by electrolysis of water with salt, as a disinfectant and detergent.

2. A treatment method according to claim 1, wherein the electrochemically activated water (2) is obtained from an aqueous solution of an alkali metal salt.

3. A treatment method according to claim 2, wherein the alkali metal salt is one of the components of the group comprising sodium hydroxide, potassium hydroxide, sodium carbonate and sodium bicarbonate.
